# EUROPÄISCHE PATENTSCHRIFT

(11) **EP 0 725 515 B1**
(45) Veröffentlichungstag und Bekanntmachung des Hinweises auf die Patenterteilung: **08.05.2002**
(21) Anmeldenummer: 96101454.5
(22) Anmeldetag: 02.02.1996
(51) Int. Cl.: H04L 12/42, H04L 12/24

(54) **Verfahren zur Initialisierung eines Netzwerks mit mehreren masterfähigen Teilnehmern**
Method for initializing a network with a plurality of participants which can function as a master
Procédé d'initialisation d'un réseau avec plusieurs participants pouvant fonctionner comme maître

(30) Priorität: 02.02.1995 DE 19503209
(43) Veröffentlichungstag der Anmeldung: 07.08.1996
(73) Patentinhaber: BECKER GmbH, D-76307 Karlsbad (DE)
(72) Erfinder: Heck, Patrick, D-76448 Durmersheim (DE); Hetzel, Herbert, D-76356 Weingarten (DE)
(74) Vertreter: Patentanwälte Westphal, Mussgnug & Partner

(56) Entgegenhaltungen:
- EP-A- 0 035 789
- GB-A- 2 177 878
- US-A- 4 677 614

## Beschreibung

Die Erfindung betrifft ein Verfahren zur Initialisierung eines Netzwerks mit einer Mehrzahl von masterfahigen Netzteilnehmern, bei dem demjenigen masterfähigen Netzteilnehmer die Masterfunktion zugewiesen wird, der zuerst eingeschaltet wird.

Die vorliegende Erfindung zeigt ein Netzwerk mit ringförmiger Architektur, bei dem die Datenquellen und Datensenken bildenden Teilnehmer durch eine einzige Datenleitung verbunden sind. Über diese Datenleitung werden die Quell- und Steuerdaten in einem zu einem Taktsignal synchronen kontinuierlichen Datenstrom übertragen. Das Taktsignal wird von einem einzigen Teilnehmer, im folgenden Master genannt, generiert. Alle anderen Teilnehmer, in folgenden Slave genannt, synchronisieren sich auf dieses Taktsignal. Davon zu unterscheiden sind rein asynchrone Datenübertragungungsverfahren, wie paketorientierte Datenübertragungsverfahren z.B. ATM-Verfahren.

In aus dem Stand der Technik bekannten Netzwerken werden oftmals mehrere Netzteilnehmer eingesetzt, die alle dazu geeignet sind, im Netz die Masterfunktion zu übernehmen. Dies hat gegenüber der Verwendung von nur einem einzigen masterfähigen Netzteilnehmer den Vorteil, daß für den Betrieb des Netzes nicht unbedingt Voraussetzung ist, daß ein bestimmter, nämlich der einzige masterfähige Netzteilnehmer, eingeschaltet ist. Bei Vorsehung mehrerer masterfähiger Netzteilnehmer kann das Netz in Betrieb genommen werden, sobald einer dieser Netzteilnehmer eingeschaltet ist. Unter diesem Gesichtspunkt ist es in bestimmten Anwendungsfällen auch sinnvoll, nicht nur einige sondern sämtliche Netzteilnehmer eines Netzwerks so zu konfigurieren, daß sie die Masterfunktion gegebenenfalls übernehmen können.

Die GB-A-2 177 878 beschreibt ein ringförmiges Netzwerk mit mehreren masterfähigen Netzteilnehmen, wobei zur Initialisierung des Netzwerkes oder bei Synchronisationsverlust jeder Teilnehmer eine ihm zugeordnete festgelegte Zahl (sog. "bidding number") über das Netzwerk an die anderen Teilnehmer abgibt, wo ein Vergleich der angebotenen Zahlen erfolgt, und der Teilnehmer mit der größten Zahl festgestellt wird, der sodann die Masterfunktion im Netzwerk übernimmt.

Problematisch bei Netzwerken mit mehreren masterfähigen Netzteilnehmern ist die Tatsache, daß im Falle eines im wesentlichen gleichzeitigen Einschaltens zweier oder mehrerer masterfähiger Netzteilnehmer all diesen Netzteilnehmern die Masterfunktion zugewiesen wird. Dies führt zu einer Kollision, die im Netzwerk eine Fehlfunktion bewirkt und ein neuerliches Einschalten des Netzwerkes bzw. der beteiligten Netzteilnehmer erforderlich macht.

Der Erfindung liegt die Aufgabe zugrunde, ein Verfahren der eingangs genannten Art so auszubilden, daß im Kollisionsfall kein neuerliches Einschalten der Netzteilnehmer erforderlich ist.

Diese Aufgabe wird erfindungsgemäß dadurch gelöst, daß im Kollisionsfall bei im wesentlichen gleichzeitiger Zuweisung der Masterfunktion an mehrere im wesentlichen gleichzeitig eingeschaltete Netzteilnehmer in all diesen Netzteilnehmern ein Zufallswert generiert wird, der nach seiner Größe unterscheidbar ist, daß ein Größenvergleich der in den betroffenen Netzteilnehmern generierten Zufallswerte ausgeführt wird und daß schließlich demjenigen der Netzteilnehmer die Masterfunktion zugewiesen wird, der den besten Wert, im Sinne von größtem oder kleinstem Wert, generiert hat.

Wenn bei Verwendung des erfindungsgemäßen Verfahrens also der Kollisionsfall auftritt und festgestellt wird, daß zwei oder mehreren Netzteilnehmern die Masterfunktion zugewiesen wurde, wird der Netzbetrieb vorerst noch nicht aufgenommen sondern die erfolgte Zuweisung der Masterfunktion zunächst aufgehoben und in all denjenigen Netzteilnehmern, denen zuvor die Masterfunktion zugewiesen wurde, ein Vergleichsverfahren ausgelöst, bei welchem der von den betroffenen Netzteilnehmern generierte beste Zufallswert ermittelt wird. Dies ist insbesondere der größte oder der kleinste dieser Werte. Dem Netzteilnehmer, der den besten Zufallswert generiert hat, wird dann die Masterfunktion zugewiesen.

Das Vergleichsverfahren wird bevorzugt so ausgeführt, daß die betroffenen Netzteilnehmer, also die Netzteilnehmer, die bei der Vergabe der Masterfunktion miteinander kollidieren, die von ihnen generierten Zufallswerte untereinander austauschen, und daß jeder Netzteilnehmer aus dem Vergleichsverfahren ausscheidet, wenn er einen besseren Wert als den von ihm erzeugten Zufallswert empfängt. Auf diese Weise wird das Vergleichsverfahren schnellstmöglich beendet und nur der Netzteilnehmer mit dem besten Zufallswert bleibt übrig.

Bei einem Netzwerk mit unidirektionaler Ringstruktur können die Zufallswerte beispielsweise über dieses Netzwerk an den jeweils nachfolgenden Netzteilnehmer weitergeleitet werden. Jeder Netzteilnehmer vergleicht die empfangenen Werte mit dem von ihm selbst erzeugten und gespeicherten Zufallswert. Ist ein empfangener Wert besser als der eigene Zufallswert, so scheidet dieser Netzteilnehmer aus dem Vergleichsverfahren aus, das heißt, er führt keinen Vergleich mehr mit seinem gespeicherten Zufallswert durch, sondern leitet die empfangenen Werte nur noch an den nachfolgenden Netzteilnehmer weiter.

Sobald ein Netzteilnehmer den von ihm selbst erzeugten und durch das Netzwerk geschickten Zufallswert wieder empfängt, wird diesem Netzteilnehmer die Masterfunktion zugewiesen. Empfängt nämlich ein Netzteilnehmer den von ihm selbst erzeugten Zufallswert, was er durch Vergleich mit dem gespeicherten Zufallswert feststellt, so ist klar, daß der von ihm erzeugte Zufallswert der beste von allen Netzteilnehmern ist. Andernfalls hätte dieser Teilnehmer vor dem Empfang seines eigenen Zufallswertes einen besseren Wert eines anderen Netzteilnehmers empfangen müssen und wäre daraufhin aus dem Vergleichsverfahren ausgeschieden.

Als Zufallswert wird eine einfache Zahl verwendet. Das heißt, von jedem betroffenen Netzteilnehmer wird eine Zufallszahl generiert, die mit den von allen anderen betroffenen Netzteilnehmern generierten Zufallszahlen arithmetisch verglichen wird. Die Masterfunktion kann dann entweder dem Netzteilnehmer mit der größten Zufallszahl oder mit der kleinsten Zufallszahl zugewiesen werden.

Nach einer anderen Ausgestaltung der Erfindung wird der Zufallswert durch eine Zeitspanne gebildet, die jeder betroffene Teilnehmer für das Ausführen einer beliebigen Operation benötigt. Die Masterfunktion wird dann demjenigen der Netzteilnehmer zugewiesen, der diese Operation zuerst beendet hat. Sobald ein Kollisionsfall auftritt, wird also in den betroffenen Netzteilnehmern eine zuvor festgelegte Operation ausgeführt, deren Durchführung eine von der als Zufallswert bestimmten Zeitspanne abhängige Zeit in Anspruch nimmt.

Sobald ein Netzteilnehmer diese Operation beendet hat, wird die Operation bevorzugt auch in allen anderen Netzteilnehmern abgebrochen. Dem Netzteilnehmer mit der zufällig gewählten kürzesten Zeitspanne wird also die Masterfunktion zugewiesen und dies sofort allen anderen betroffenen Netzteilnehmern mitgeteilt. Dadurch wird verhindert, daß noch einem weiteren Netzteilnehmer die Masterfunktion zugewiesen wird und eine erneute Kollision vorliegt.

Anstelle des Abbruchs der Operationen in allen anderen Netzteilnehmern kann auch die Zuweisungsfunktion für diese außer Kraft gesetzt werden. Die Operationen können dann dort jeweils bis zum Ende ausgeführt werden, ohne daß diesen späteren Netzteilnehmern eine Masterfunktion zugewiesen wird.

Eine Möglichkeit für eine solche Operation besteht in dem Herabzählen von einer Zahl auf eine andere Zahl, insbesondere Null. Mindestens eine der beiden Zahlen wird als Zufallszahl von dem jeweiligen Netzteilnehmer generiert und so die für die Durchführung der Operation benötigte Zeitspanne bestimmt.

Bei einer bevorzugten Ausführungsform der Erfindung wird der Kollisionsfall dadurch festgestellt, daß ein als Master eingesetzter Netzteilnehmer masterspezifische Signale abgibt und von einem anderen, ebenfalls als Master eingesetzten Netzteilnehmer generierte masterspezifische Signale empfängt. Als masterspezifisches Signal kann hier insbesondere das von einem als Master eingesetzten Netzteilnehmer generierte Taktsignal verwendet werden. Sobald der beschriebene Kollisionsfall auf diese Weise festgestellt wird, wird in den an der Kollision beteiligten Netzteilnehmern das erfindungsgemäße Vergleichsverfahren ausgelöst, woraufhin dann eine eindeutige Zuweisung der Masterfunktion erfolgen kann.

Da es beim erfindungsgemäßen Verfahren in seltenen Fällen vorkommen kann, daß zwei oder mehrere Netzteilnehmer einen gleich guten Zufallswert generieren und diesen Netzteilnehmern dann nochmals im wesentlichen gleichzeitig die Masterfunktion zugewiesen wird, kann in diesen Netzteilnehmern bei einer bevorzugten Ausführungsform des erfindungsgemäßen Verfahrens nochmals das beschriebene Vergleichsverfahren ausgelöst werden. Dieser Vorgang wird gegebenenfalls solange wiederholt, bis eine eindeutige Zuweisung der Masterfunktion erfolgt ist.

In einem Netzwerk, in welchem das erfindungsgemäße Verfahren angewendet wird, können entweder mehrere oder auch alle Netzteilnehmer so ausgebildet sein, daß sie die Masterfunktion übernehmen können.

Auf besonders vorteilhafte Weise läßt sich das erfindungsgemäße Verfahren in einem vernetzten stationären oder mobilen Kommunikationssystem anwenden, beispielsweise in einem Kommunikationssystem im Haushalt oder in einem Kraftfahrzeug.

Weitere bevorzugte Ausführungsformen des erfindungsgemäßen Verfahrens sind in den Unteransprüchen angegeben.

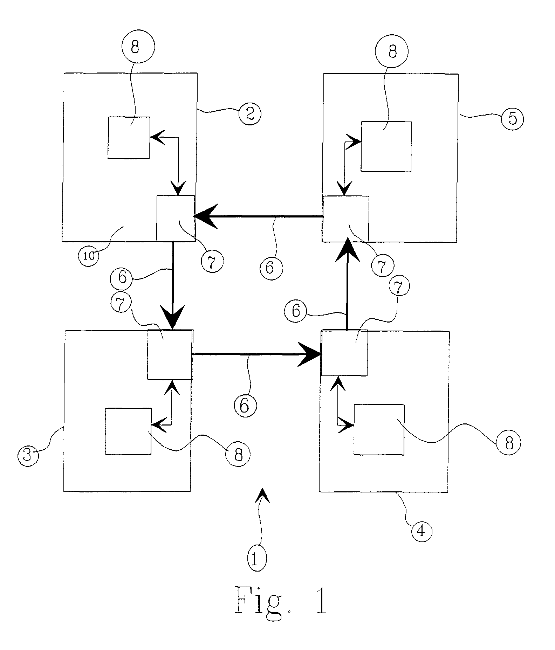

Die Erfindung wird im folgenden unter Bezugnahme auf die einzige Figur anhand eines Beispiels beschrieben; die Figur zeigt ein Blockschaltbild eines mittels eines erfindungsgemäßen Verfahrens betreibbaren ringförmigen Netzwerks.

Das ringförmige Netzwerk 1 weist vier Netzteilnehmer 2, 3, 4, 5 auf, die über Datenleitungen 6 zu einer ringförmigen Struktur miteinander verbunden sind. Alle Daten zwischen den einzelnen Netzteilnehmern 2, 3, 4, 5 werden bei dem dargestellten Netzwerk 1 immer entgegen dem Uhrzeigersinn unidirektional über die Datenleitungen 6 übertragen.

Jeder der Netzteilnehmer 2, 3, 4, 5 besitzt eine Eingangs-/Ausgangs-Schnittstelle 7, an die jeweils der in dem unidirektionalen, ringförmigen Netzwerk 1 vorangehende und nachfolgende Netzteilnehmer angeschlossen sind. Über die Schnittstellen 7 und die Datenleitungen 6 kommunizieren die einzelnen Netzteilnehmer 2, 3, 4, 5 miteinander.

Jeder Netzteilnehmer 2, 3, 4, 5 weist weiterhin einen Mikroprozessor 8 auf, welcher Daten an die ihm zugeordnete Schnittstelle 7 sendet bzw. Daten von dieser Schnittstelle 7 empfängt.

Das beschriebene Netzwerk 1 arbeitet bei seiner Inbetriebnahme wie folgt:

Die einzelnen Netzteilnehmer 2, 3, 4, 5 können je nach Bedarf zu unterschiedlichen Zeitpunkten eingeschaltet werden. Dabei wird demjenigen Netzteilnehmer 2, 3, 4, 5 die Masterfunktion zugewiesen, welcher als erstes eingeschaltet wird. Alle Netzteilnehmer 2, 3, 4, 5 sind dabei so ausgebildet, daß sie dazu geeignet sind, die Masterfunktion zu übernehmen.

Im Falle des gleichzeitigen Einschaltens mehrerer Netzteilnehmer, beispielsweise der Netzteilnehmer 2 und 4 wird beiden Netzteilnehmern 2, 4 die Masterfunktion zugewiesen. Daraufhin geben beide Netzteilnehmer 2, 4 ein masterspezifisches Signal, beispielsweise ein Taktsignal ab, welches vom jeweils anderen Netzteilnehmer 2, 4 über die Datenleitungen 6 und die Schnittstellen 7 empfangen wird. In diesem Fall wird in beiden Netzteilnehmern 2, 4 festgestellt, daß ein Kollisionsfall aufgetreten ist, bei dem zwei Netzteilnehmern gleichzeitig die Masterfunktion zugewiesen wurde.

Erfindungsgemäß generieren daraufhin die Mikroprozessoren 8 der beiden Netzteilnehmer 2, 4 jeweils eine Zufallszahl, die zum einen in dem jeweiligen Netzteilnehmer 2, 4 gespeichert und andererseits über die jeweilige Schnittstelle 7 in das Netz eingespeist wird. Die vom Netzteilnehmer 2 generierte Zufallszahl wird also an den nachfolgenden Netzteilnehmer 3 weitergeleitet. Dieser ist nicht am Vergleichsverfahren beteiligt und leitet daher diese Zufallszahl nur weiter und zwar an den nachfolgenden Netzteilnehmer 4.

Dieser Netzteilnehmer ist am Vergleichsverfahren beteiligt und vergleicht daher die empfangene Zufallszahl mit der von ihm generierten und gespeicherten Zufallszahl. Stellt er dabei fest, daß die empfangene Zufallszahl größer ist als die gespeicherte Zufallszahl, so schaltet er sich aus dem Vergleichsverfahren aus und leitet die empfangene Zusatzzahl an den nachfolgenden Netzteilnehmer 5 weiter. Dieser Netzteilnehmer ist wiederum nicht an dem Vergleichsverfahren beteiligt, sondern übermittelt die empfangene Zufallszahl lediglich an den nachfolgenden Netzteilnehmer 2, der diese Zufallszahl ursprünglich abgesandt hat.

Dem Netzteilnehmer 2, welcher in diesem Fall feststellt, daß die empfangene Zufallszahl mit seiner gespeicherten Zufallszahl übereinstimmt, wird nun die Masterfunktion zugewiesen, das heißt, dieser Netzteilnehmer beginnt nun mit der Aussendung der Taktsignale.

Entsprechend wird mit dem vom Netzteilnehmer 4 ausgesandten Zufallswert verfahren, das heißt, der Netzteilnehmer 5 leitet diesen Zufallswert nur weiter, da er nicht am Vergleichsverfahren teilnimmt. Der Netzteilnehmer 2 stellt fest, daß seine gespeicherte Zufallszahl größer ist als die empfangene Zufallszahl. Er bleibt daher am Vergleichsverfahren beteiligt und sendet die empfangene Zufallszahl weiter. Das Weitersenden der empfangenen kleineren Zufallszahl könnte allerdings auch unterbleiben, da alle auf den Netzteilnehmer 2 folgenden Netzteilnehmer zuvor die größere Zufallszahl des Netzteilnehmers 2 empfangen und sich gegebenenfalls aus dem Vergleichsverfahren bereits ausgeschaltet haben.

Auf diese Weise ist sichergestellt, daß derjenige der beiden kollidierenden Netzteilnehmer 2 und 4 die Masterfunktion zugeteilt erhält, der die größere Zufallszahl generiert hat. Somit ist eine eindeutige Zuweisung der Masterfunktion an einen der kollidierenden Netzteilnehmer möglich, ohne daß ein neuerliches Einschalten dieser Netzteilnehmer erforderlich wäre.

## Patentansprüche

1. Verfahren zur Initialisierung eines Netzwerks mit einer Mehrzahl von taktgebefähigen Netzteilnehmern, welche eine eigene Einheit zur Generierung eines Takts aufweisen,
bei dem festgestellt wird, ob die Synchronisation der Netzwerkteilnehmer verloren gegeangen ist,
bei dem abhängig davon von all den taktgebefähigen Netzteilnehmern eine Zahl an die anderen Netzteilnehmern geschickt wird, die nach ihrer Größe unterscheidbar ist, daß ein arithmetischer Größenvergleich der Zahlen in diesen Netzteilnehmern ausgeführt wird
und bei dem schließlich demjenigen Netzteilnehmer die Taktgeberfunktion zugewiesen wird, der die größte oder die kleinste Zahl, geschickt hat,
**dadurch gekennzeichnet,**
**daß** das Netzwerk (1) eine unidirektionale Ringstruktur aufweist,
**daß** festgestellt wird, ob ein als Taktgeber eingesetzter Netzteilnehmer (2, 3, 4, 5) Taktsignale abgibt und gleichzeitig von einem anderen, ebenfalls als Taktgeber eingesetzten Netzteilnehmer (2, 3, 4, 5) generierte Taktsignale empfängt,
**daß** abhängig davon in all den taktgebefähigen Netzteilnehmern (2, 3, 4, 5) eine Zufallszahl generiert wird, die die Zahl für den arithmetischen Vergleich bildet,
**daß** ein arithmetischer Größenvergleich der generierten Zufallszahlen ausgeführt wird,
und **daß** demjenigen der Netzteilnehmer (2, 3, 4, 5) die alleinige Taktgeberfunktion zugewiesen wird, der die größte oder die kleinste Zufallszahl generiert hat,
indem die taktgebefähigen Netzteilnehmer (2, 3, 4, 5) die von ihnen generierten Zufallszahlen über dieses Netzwerk an den jeweils nachfolgenden Netzteilnehmer (2, 3, 4, 5) weiterleiten und jeder Netzteilnehmer aus dem Vergleichsverfahren ausscheidet, der eine im arithmetischen Vergleich schlechtere Zufallszahl als die ihm zugeführte Zufallszahl generiert hat, und dadurch demjenigen am Vergleichsverfahren teilnehmenden Netzteilnehmer die Taktgeberfunktion zugewiesen wird, der die selbst erzeugte Zufallszahl wieder empfängt.

2. Verfahren nach Anspruch 1, **dadurch gekennzeichnet, daß** das Verfahren in allen Netzteilnehmern (2, 3, 4, 5) beendet wird, sobald das Verfahren in einem der Netzteilnehmer (2, 3, 4, 5) abgeschlossen ist.

3. Verfahren nach einem der vorhergehenden Ansprüche, **dadurch gekennzeichnet, daß**, falls mehrere Netzteilnehmer (2, 3, 4, 5) eine gleiche Zufallszahl generieren und diesen Netzteilnehmern (2, 3, 4, 5) dann nochmals im wesentlichen gleichzeitig die Taktgeberfunktion zugewiesen wird, in diesen Netzteilnehmern (2, 3, 4, 5) wiederum das beschriebene Verfahren ausgelöst wird.

4. Verfahren nach einem der vorhergehenden Ansprüche,**dadurch gekennzeichnet, daß** im Netzwerk (1) ausschließlich taktgeberfähige Netzteilnehmer (2, 3, 4, 5) eingesetzt werden.

5. Verwendung des Verfahrens nach einem der vorhergehenden Ansprüche bei einem stationären Kommunikationssystem, insbesondere bei einem Kommunikations-System im Haushalt.

6. Verwendung des Verfahrens nach einem der Ansprüche 1 bis 5 bei einem mobilen Kommunikationssystem, insbesondere bei einem Kommunikationssystem in einem Kraftfahrzeug.

## Claims

1. Method for initialising a network with a plurality of network nodes capable of generating clock pulses, which have their own unit for generating a clock pulse, in which it is established whether the synchronisation of the network nodes has been lost and in which, dependent on this, a number is sent from all the network nodes capable of generating clock pulses to the other network nodes, which is distinguishable by its size, that an arithmetic comparison of the magnitude of the numbers is carried out in these network nodes and in which finally the clock generator function is allocated to that network node, which has sent the largest or the smallest number, **characterised in that** the network (1) has a unidirectional ring structure, that it is established whether a network node (2, 3, 4, 5) used as a clock generator is outputting clock signals and at the same time is receiving clock signals generated by another network node (2, 3, 4, 5) likewise used as a clock generator, that, dependent on this, a random number is generated in all the network nodes (2, 3, 4, 5) capable of generating clock pulses, which forms the number for the arithmetic comparison, that an arithmetic comparison of the magnitude of the random numbers generated is carried out, and that the sole clock generator function is allocated to that network node (2, 3, 4, 5) which has generated the largest or the smallest random number, as the network nodes (2, 3, 4, 5) capable of generating clock pulses pass on the random numbers generated by them via this network to the respectively subsequent network node (2, 3, 4, 5) and each network node which has generated a random number which is worse in the arithmetic comparison than the random number passed to it drops out from the comparison method, and, as a result, the clock generator function is allocated to that network node participating in the comparison method, which has returned to it the random number which it generated itself.

2. Method according to claim 1, **characterised in that** the method is terminated in all the network nodes (2, 3, 4, 5) as soon as the method has been completed in one of the network nodes (2, 3, 4, 5).

3. Method according to one of the preceding claims, **characterised in that** if several network nodes (2, 3, 4, 5) should generate the same random number and then the clock generator function is allocated to these network nodes (2, 3, 4, 5) again at essentially the same time, the method described is initiated in these network nodes (2, 3, 4, 5) once more.

4. Method according to one of the preceding claims, **characterised in that** only network nodes (2, 3, 4, 5) capable of generating clock pulses are used in the network (1).

5. Use of the method according to one of the preceding claims in a stationary communications system, in particular in a domestic communications system.

6. Use of the method according to one of Claims 1 to 5 in a mobile communications system, in particular in a communications system in a motor vehicle.

## Revendications

1. Procédé d'initialisation d'un réseau à plusieurs participants susceptibles de générer une horloge en ayant chacun une unité propre pour générer une horloge,
- selon lequel on constate si la synchronisation des participants au réseau a été perdue,
- selon lequel, en fonction de cela, tous les participants susceptibles de générer une horloge envoient un nombre aux autres participants, ces nombres étant différents en valeur et on effectue une comparaison arithmétique des nombres dans ces participants,
- et finalement la fonction d'horloge est attribuée à celui des participants qui a envoyé le plus grand ou le plus petit nombre,
**caractérisé en ce que**
- le réseau (1) a une structure annulaire unidirectionnelle,
- on détermine si un participant au réseau (2, 3, 4, 5) utilisé comme générateur d'horloge fournit des signaux d'horloge et si en même temps un autre participant au réseau (2, 3, 4, 5), également utilisé comme horloge, génère des signaux d'horloge,
- en fonction de cela dans tous les participants susceptibles de générer une horloge (2, 3, 4, 5), on génère un nombre aléatoire qui forme le nombre pour la comparaison arithmétique,
- on effectue une comparaison des grandeurs arithmétiques des nombres aléatoires générés,
- et on attribue la fonction d'horloge unique à celui des participants (2, 3, 4, 5) qui a généré le plus petit ou le plus grand nombre aléatoire,
- les participants (2, 3, 4, 5) susceptibles de générer une horloge, retransmettant les nombres aléatoires générés par eux, à travers le réseau vers chaque fois le participant suivant (2, 3, 4, 5), et chaque participant étant éliminé de la procédure de comparaison s'il a un nombre aléatoire plus mauvais dans la comparaison arithmétique que le nombre aléatoire qu'il aura généré, et ainsi la fonction d'horloge est attribuée au participant au réseau concerné par la procédure de comparaison qui reçoit de nouveau le même nombre aléatoire.

2. Procédé selon la revendication 1,
**caractérisé en ce qu'**
il est terminé dans tous les participants (2, 3, 4, 5) dès que le procédé est fermé dans l'un des participants (2, 3, 4, 5).

3. Procédé selon l'une quelconque des revendications précédentes,
**caractérisé en ce qu'**
au cas où plusieurs participants (2, 3, 4, 5) génèrent un même nombre aléatoire et ces participants (2, 3, 4, 5) se voient en outre attribuer essentiellement de façon simultanée la fonction d'horloge, on déclenche de nouveau le procédé décrit dans ces participants (2, 3, 4, 5).

4. Procédé selon l'une quelconque des revendications précédentes,
**caractérisé en ce que**
le réseau (1) comporte uniquement des participants susceptibles de générer l'horloge (2, 3, 4, 5).

5. Application du procédé selon l'une quelconque des revendications précédentes à un système de communication stationnaire, notamment un système de communication domestique.

6. Application du procédé selon l'une quelconque des revendications 1 à 5 à un système de communication mobile, notamment un système de communication dans un véhicule automobile.
